(19) Europäisches Patentamt
European Patent Office
Office européen des brevets

(11) **EP 2 982 483 B1**

(12) **FASCICULE DE BREVET EUROPEEN**

(45) Date de publication et mention
de la délivrance du brevet:
**27.04.2022 Bulletin 2022/17**

(21) Numéro de dépôt: **15180288.1**

(22) Date de dépôt: **07.08.2015**

(51) Classification Internationale des Brevets (IPC):
**B25J 9/00** *(2006.01)* **B25J 9/16** *(2006.01)*
**B66D 1/38** *(2006.01)* **B25J 5/00** *(2006.01)*

(52) Classification Coopérative des Brevets (CPC):
**B25J 9/0078; B25J 5/00; B66D 1/38**

(54) **ROBOT À CÂBLES RECONFIGURABLE ET MÉTHODE DE CONFIGURATION D'UN TEL ROBOT**

REKONFIGURIERBARER KABELROBOTER, UND KONFIGURATIONSMETHODE EINES SOLCHEN ROBOTERS

RECONFIGURABLE CABLED ROBOT AND METHOD FOR CONFIGURING SUCH A ROBOT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.08.2014 FR 1457672**

(43) Date de publication de la demande:
**10.02.2016 Bulletin 2016/06**

(73) Titulaire: **Institut de Recherche Technologique Jules Verne**
**44340 Bouguenais (FR)**

(72) Inventeurs:
• **GIRIN, Alexis**
**44119 TREILLIERES (FR)**
• **GAGLIARDINI, Lorenzo**
**44340 BOUGUENAIS (FR)**
• **CARO, Stéphane**
**44300 Nantes (FR)**
• **GOUTEFARDE, Marc**
**34090 Montpellier (FR)**
• **YVAIN, Paul**
**44100 NANTES (FR)**

(74) Mandataire: **Alatis**
**3 rue Paul Escudier**
**75009 Paris (FR)**

(56) Documents cités:
EP-A1- 1 076 033      EP-A1- 2 151 411
CN-B- 102 114 632     US-A- 5 585 707
US-A1- 2009 066 100

## Description

L'invention concerne un robot à câbles reconfigurable et une méthode de configuration d'un tel robot. L'invention est plus particulièrement dédiée au domaine des robots à câbles destinés à réaliser des interventions nécessitant des trajectoires complexes qui ne peuvent être réalisées au moyen de points d'ancrage disposés selon une configuration plane.

Un robot à câbles est un robot à cinématique parallèle dans lequel une plate-forme est positionnée et déplacée dans l'espace au moyen de câbles agissant sur ladite plate-forme. Chaque câble s'étend entre un point d'accroche sur cette plate-forme et, par exemple, un treuil fixé à une structure fixe, ledit treuil constituant un ancrage. La capacité de variation importante de la longueur de câble entre le point d'accroche et l'ancrage, permet d'obtenir un volume de travail de la plate-forme particulièrement important avec une structure légère et facilement mise en place, par exemple, en installant les ancrages au plafond d'un atelier. La stabilité de la plate-forme dans une position donnée est assurée par son équilibre statique, lequel équilibre est réalisé par la tension des câbles qui agissent de manière à s'opposer aux forces extérieures auxquelles ladite plate-forme est soumise. Ainsi, pour assurer la stabilité de n'importe quelle position et orientation de la plate-forme dans l'espace, un minimum de 7 câbles sont nécessaires.

Le document GB 2 495 958 décrit un tel dispositif. Si un tel robot de l'art antérieur présente un volume de travail important, une partie importante de ce volume de travail potentiel est limitée par des phénomènes qualifiés, au sens large, de collisions.

Ainsi, une partie du volume de travail n'est pas accessible selon certaines cinématiques, du fait d'un risque de collision, ou interférence, entre les câbles eux-mêmes. De plus, lorsqu'un objet se trouve dans l'environnement du robot, il existe un risque de collision entre cet objet et des câbles selon certaines trajectoires. Finalement, certaines parties du volume de travail sont accessibles selon des configurations différentes des câbles mais qui ne présentent pas toutes la même stabilité de la plate-forme. Ces phénomènes de collision sont connus en robotique mais leur résolution est beaucoup plus complexe dans le cas d'un robot à câbles du fait, d'une part, du plus grand volume couvert, et surtout, de la nécessité de répartir en intensité et en orientation les forces appliquées par les câbles sur la plate-forme pour assurer la stabilité de celle-ci, chaque câble ne pouvant agir sur ladite plate-forme que selon une direction et un sens correspondant à une tension du câble, ce qui introduit des contraintes supplémentaires. La stabilité d'une pose, ou posture, particulière de la plate-forme est définie par la capacité du dispositif à résister à un torseur selon des composantes quelconques et appliquées à ladite plate-forme, en restant dans une plage de déformation admissible.

Dans le cas d'une trajectoire, l'équilibre statique de la plate-forme doit être assuré en « chacun des points » de la trajectoire, c'est-à-dire de manière continue.

Le document « On the Design of Adaptive Cable-Driven Systems », Rosati et al., Journal of Mechanisms and Robotics, Vol 3, Mai 2011, décrit une méthode pour l'optimisation du positionnement des ancrages mobiles d'un robot à câbles, mais reste limité à des ancrages contenus et se déplaçant dans un plan et ne prend pas en compte les collisions éventuelles avec des objets contenus dans l'espace de travail du robot. Les inventeurs ont constaté que la méthode préconisée dans ce document n'est pas utilisable pour la détermination d'une configuration optimale en regard d'une trajectoire, dans le cas d'un dispositif comprenant une distribution tridimensionnelle des ancrages. En effet, la méthode préconisée dans ce document repose sur une expression analytique variationnelle des conditions d'équilibre statique, ce qui dans le cas d'un torseur dont les composantes sont tridimensionnelles n'est pas réalisable du point de vue de la modélisation. Par ailleurs, d'un point de vue pratique, la mise en oeuvre des principes décrits dans ce document n'est pas réalisable ou est difficilement réalisable dans le cas d'une répartition tridimensionnelle des ancrages. En effet, la méthode préconisée selon ce document, consiste à déterminer une configuration des ancrages adaptée à une situation donnée puis à déplacer lesdits ancrages selon des modalités qui conservent cette configuration, ce qui, dans le plan, revient à déplacer les ancrages selon des cercles. L'extrapolation tridimensionnelle des enseignements de ce document reviendrait à prévoir le déplacement des ancrages selon des sphères ce qui est particulièrement complexe et coûteux de mise en oeuvre.

Le document US 2009 066100 décrit un robot à câbles, lesdits câbles étant manoeuvrés par des treuils, et comportant des ancrages aptes à être déplacés au moyen d'un actionneur. Selon cet exemple de réalisation de l'art antérieur, un ancrage mobile est constitué par une barre transversale, sensiblement cylindrique, liée à un poteau de la structure fixe et déplaçable en translation par rapport audit poteau selon un axe vertical, le ou les treuils manoeuvrant le câble passant sur cette barre transversale étant fixes. Cette configuration est dictée par la nature de l'actionneur agissant sur le câble, lequel actionneur est un treuil comportant un moteur et un tambour sur lequel le câble est enroulé. Ledit câble est enroulé sur le tambour selon une configuration hélicoïdale de sorte que lorsque le câble est enroulé ou dévidé, le point de sortie du câble par rapport au tambour se déplace parallèlement à l'axe dudit tambour. Aussi, l'utilisation d'une poulie pour réaliser l'ancrage mobile n'est pas possible et le câble se déplace sur la barre transversale réalisant l'ancrage mobile parallèlement à l'axe longitudinal de cette barre, provoquant usure, bruit et des torsions parasites dans le câble, qui sont transmise à la plate-forme.

Le document EP 2 151 411 A1 divulgue une configuration de treuil motorisé comportant un tambour d'enroulement muni d'un filet guide hélicoïdal pour l'enroulement d'un câble, une poulie d'orientation dont l'axe de rotation est perpendiculaire à l'axe de rotation du tambour, et des moyens suiveurs pour déplacer en translation la poulie d'orientation.

L'invention vise à résoudre les inconvénients de l'art antérieur et concerne à cette fin un dispositif selon la revendication 1.

Ainsi, un tel dispositif à câbles permet de couvrir un large volume de travail dans un environnement encombré et la reconfiguration tridimensionnelle des ancrages de l'ensemble reconfigurable dudit dispositif à câbles permet d'accroître le volume de travail hors collision dudit dispositif, et les caractéristiques des treuils permettent d'utiliser des poulies comme ancrage, quelle que soit la configuration et ainsi d'éviter, notamment, les phénomènes de torsion parasite dans les câbles.

Dans tout le texte, les termes « lié » et « liaison », appliqués à des éléments matériels, définissent une liaison mécanique de tout type ou du type précisé entre lesdits éléments. Les termes « fixé » ou « fixation » définissent une liaison mécanique complète entre les éléments matériels considérés.

L'invention est avantageusement mise en oeuvre selon les modes de réalisation exposés ci-après lesquels sont à considérer individuellement ou selon toute combinaison techniquement opérante.

Avantageusement, les moyens suiveurs du dispositif objet de l'invention comprennent un écrou en prise sur le filet guide du tambour et portant la poulie d'orientation. Ainsi, ladite poulie suit parfaitement le câble lors de son enroulement ou de son déroulement sur le tambour. Par ailleurs, ce moyen suiveur en prise permanente avec le tambour assure un maintien du câble dans le filetage guide et offre ainsi une sécurité vis-à-vis de l'extraction potentielle dudit câble de ce filetage guide. En effet la sortie du câble de son guide sur le tambour est susceptible de provoquer la chute de la plate-forme.

Selon un mode de réalisation avantageux, l'ensemble de câbles comporte un câble comprenant un conducteur électrique de puissance ou de commande ou un moyen filaire de transmission d'information vers la plate-forme. Ainsi, l'absence de sollicitation parasite des câbles permet d'utiliser ceux-ci pour transférer de l'énergie et de l'information vers la plate-forme sans multiplier les obstacles potentiels dans l'espace de travail.

Selon un mode de réalisation, la structure fixe du dispositif à câbles, comprend un robot apte à se déplacer. Ce mode de réalisation permet d'adapter la configuration de ladite structure fixe à la topologie de l'espace dans lequel le robot à câbles est déployé.

Avantageusement, le robot à câbles comprend :
iv. des ancrages comprenant une capacité de déplacement selon un axe de rotation vis-à-vis de la structure fixe.

Cette possibilité d'orientation des ancrages offre un degré de liberté supplémentaire.

Selon un mode particulier de réalisation le robot à câbles comprend :
v. des moyens de guidage et des moyens de motorisation et de commande pour le déplacement d'un ancrage de l'ensemble reconfigurable.

Ainsi, la position des ancrages dudit robot est modifiable de manière automatique.

Selon un autre mode de réalisation particulier du robot à câbles, compatible avec le précédent, celui-ci comporte :
vi. des moyens de motorisation et de commande pour l'orientation d'un ancrage vis-à-vis de la structure fixe.

Avantageusement, le robot à câbles comporte :

vii. un directeur de commande comprenant un calculateur pour le pilotage des moyens de motorisation de l'ensemble de moteur et de l'ensemble reconfigurable ;
viii. un moyen de programmation apte à dialoguer avec le directeur de commande pour programmer des mouvements de la plate-forme.

Ainsi, les mouvements du robot à câbles et la reconfiguration des ancrages sont programmables pour la réalisation d'une tâche spécifique.

L'invention est avantageusement mise ne oeuvre pour la réalisation d'une opération de décapage/peinture d'une surface courbe de grande dimension. Les termes « surface de grande dimension » désignent une surface comprise dans un volume de l'ordre de 5 m$^3$ ou plus. Dans ces conditions, le dispositif à câbles est avantageusement utilisé pour supporter un effecteur de décapage/peinture ou pour supporter un bras robotisé supportant un tel effecteur, permettant ainsi d'automatiser ces opérations essentiellement manuelles selon l'art antérieur.

L'invention concerne également un procédé selon la revendication 11 pour la détermination des configurations minimales de l'ensemble reconfigurable d'un dispositif à câbles selon l'invention en vue de son utilisation selon l'un quelconque des modes de réalisation précédents, afin de réaliser une trajectoire définie dans des conditions d'équilibre statique, lequel procédé comprenant les étapes consistant à :

a. obtenir l'agencement matériel du dispositif à câbles ;
b. obtenir la trajectoire visée de l'effecteur, discrétisée en segments de longueur appropriée ;

c. obtenir le torseur des forces extérieures appliquées à la plate-forme en chaque point de ladite trajectoire discrétisée;

d. obtenir un ensemble discret de configurations, dites configurations de départ, de l'ensemble reconfigurable ;

e. analyser pour chaque configuration de départ la capacité d'atteindre tous les segments de la trajectoire définie à l'étape b) dans les conditions d'équilibre statique en fonction des actions extérieures définies à l'étape c) et de l'agencement matériel obtenue à l'étape a) et éliminer les configurations de départ les moins prometteuses ;

f. déterminer parmi les configurations restantes de l'étape e) les configurations dominantes couvrant la trajectoire et incluant d'autres configurations ;

g. regrouper les configurations non dominantes en fonction de leur couverture par des configurations dominantes ;

h. rechercher les segments de trajectoires, dits segments singuliers, couverts par une seule configuration dominante, éliminer les configurations inclues dans lesdites solutions dominantes qui ne couvrent pas les segments singuliers ;

j. déterminer parmi les configurations restantes à l'étape h) une combinaison minimale de configurations couvrant l'ensemble des segments obtenus à l'étape b)

Avantageusement, l'étape j) sera suivie de l'étape suivante:

k. générer un programme de réalisation de la trajectoire intégrant les changements de configuration déterminés à l'étape j), transmettre ledit programme au directeur de commande du dispositif et réaliser la trajectoire.

Ainsi, le procédé objet de l'invention utilise des représentations discrètes du dispositif à câbles et calcule un ensemble de solutions optimales se recouvrant sur cet ensemble discret de solutions, s'affranchissant ainsi de la nécessité de déterminer une formulation analytique du problème. Le tri et l'élimination séquentielle des configurations initialement définies, permettent de réduire considérablement la combinatoire des configurations admissibles pour tendre vers un ensemble optimal de configurations pour une application donnée.

Avantageusement l'étape a) du procédé objet de l'invention comporte les étapes consistant à :

ai obtenir le nombre de câbles du dispositif à câbles;

aii. obtenir le diamètre desdits câbles ;

aiii. obtenir le module d'élasticité desdits câbles ;

aiv. obtenir la tension maximale admissible dans lesdits câbles. ;

av. obtenir les coordonnées d'un points d'accroche dans un repère lié à la plate-forme.

Ainsi, l'analyse des configurations réalisée à l'étape e) prend en compte, non seulement des critères géométriques, mais également les caractéristiques élastiques des câbles.

Avantageusement, l'étape b) du procédé objet de l'invention comprend les étapes consistant à :

bi. obtenir une suite de points définissant une suite de segments correspondant à la trajectoire dans un repère de référence ;

bii. obtenir l'orientation de la plate-forme correspondant à chaque point de la trajectoire discrétisée

Cette étape préparatoire permet de définir les conditions dans lesquelles la stabilité et l'absence de collisions sont analysées.

Avantageusement, l'étape b) du procédé objet de l'invention comprend une étape consistant à :

biii. obtenir les limites de variation du torseur des actions extérieures agissant sur la plate-forme du robot à câbles.

L'étape e) est réalisée en vérifiant à tout moment l'équilibre statique de la plate-forme et, le cas échéant, en tenant compte de l'imprécision de positionnement engendrée par la flexibilité des câbles. La définition d'une plage de variation fixe des actions extérieures, correspondant aux cas extrêmes; permet de simplifier les calculs et d'en limiter le volume.

Selon un mode de réalisation particulier du procédé objet de l'invention, celui-ci comporte avant l'étape e) une étape consistant à :

l. obtenir la position, la forme et l'orientation d'un obstacle dans le volume de travail du dispositif à câbles ; et l'étape e) comprend un test de collision avec ledit obstacle.

Selon un mode de réalisation avantageux du procédé objet de l'invention, celui comprend avant l'étape d) une étape consistant à :

m. générer automatiquement un ensemble de configurations de départ pour l'étape d).

Ce mode de réalisation tire avantage de la réduction de la combinatoire procurée par les tests et les éliminations séquentielle des configurations non pertinentes, pour générer automatiquement un ensemble de configurations de départ plus large et ainsi obtenir un champ élargi de recherche d'un enchaînement optimal de configurations pour la réalisation de la tâche visée.

Avantageusement, le procédé objet de l'invention comprend, après l'étape e) si aucune solution prometteuse n'est trouvée, ou après l'étape j) si aucune combinaison de configurations ne permet de couvrir l'ensemble de la trajectoire définie à l'étape b), les étapes consistant à :

n. modifier la position ou l'orientation de l'obstacle dans le volume de travail ;
o. reprendre à l'étape e) avec les nouvelles coordonnées de l'obstacle.

Ainsi le procédé objet de l'invention permet, selon ce mode de réalisation, d'optimiser le placement des éléments de la scène de travail dans le volume de travail du robot à câbles.

L'invention est exposée ci-après selon ses modes de réalisation préférés, nullement limitatifs, et en référence aux figures 1 à 9 dans lesquelles :

- la figure 1 représente de manière schématique selon une vue en perspective un exemple de réalisation d'un robot à câbles ;
- la figure 2 montre de manière symbolique une configuration du robot à câbles, dans laquelle les ancrages sont placés au sommet d'un parallélépipède, figure 2A, selon une vue en perspective, figure 2B selon une vue de dessus ;
- la figure 3 représente schématiquement les trajectoires nécessaires dans le volume de travail du robot permettant de travailler sans collision sur une pièce représentée de manière symbolique ;
- la figure 4 montre de manière symbolique une reconfiguration du dispoisitif représenté figure 2, figure 4A, selon une vue en perspective, figure 4B selon une vue de dessus ;
- la figure 5 illustre de manière schématique un mode de réalisation du procédé objet de l'invention, figure 5A selon un logigramme, et figure 5B selon une illustration unidimensionnelle et simplifiée de la sélection des configurations ;
- la figure 6 représente schématiquement selon une vue de face, un exemple de robot à câbles non conforme à l'invention, à l'intérieur d'une structure ;
- la figure 7 montre selon un vue partielle en perspective vue de dessus, un exemple d'installation d'un ancrage et d'un treuil motorisé dans une structure fixe ;
- la figure 8 représente selon une vue schématique en coupe longitudinale, un exemple de réalisation d'un tambour de treuil comportant deux poulies d'orientation tel que présent dans le dispositif selon l'invention ;
- la figure 9 représente schématiquement la section droite d'un exemple de câble utilisé dans un robot à câbles mis en oeuvre par l'invention ;
- et la figure 10 montre selon une vue de principe en perspective un exemple de robot à câbles non conforme à l'invention dans lequel les ancrages sont supportés par des robots mobiles.

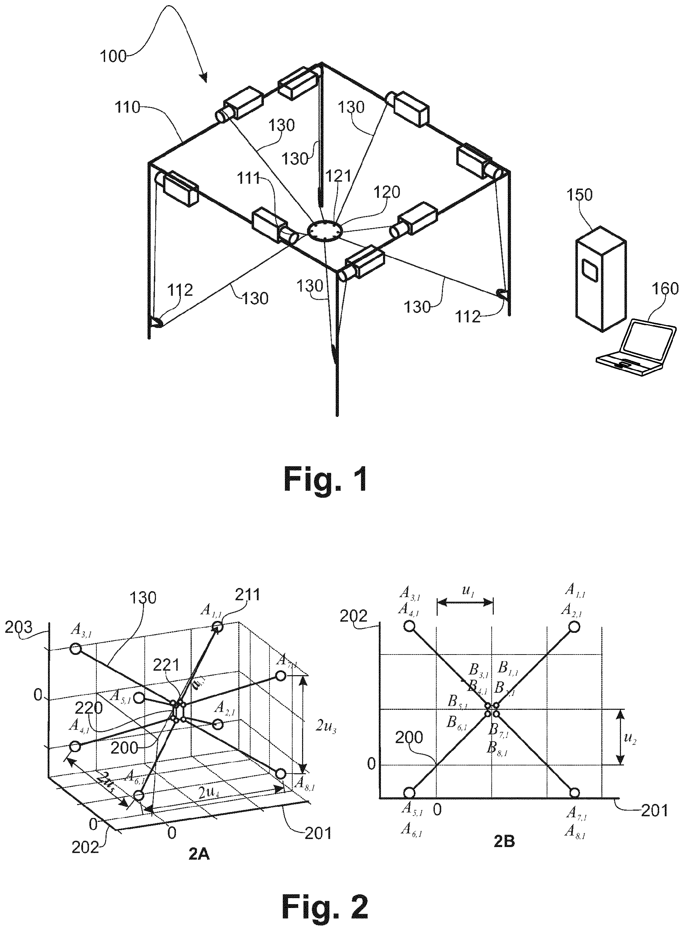

Figure 1, un dispositif (100) robot à câbles comporte une structure fixe (110), sous la forme d'un portique. Une plate-forme (120) est positionnée, déplacée et maintenue en position dans ladite structure (110) fixe par l'intermédiaire d'une pluralité de câbles (130), ici 8 câbles selon cet exemple de réalisation. La plate-forme comprend des moyens mécaniques, de transmission de puissance et d'information pour lui connecter un effecteur (non représenté), lequel effecteur, selon un exemple de réalisation, est un bras robotisé. Chaque câble (130) s'étend entre une accroche (121) le liant la plate-forme (120) à une de ses extrémités, et un ancrage (111, 112) lié à la structure (110) fixe. Les câbles sont tendus entre l'accroche et l'ancrage et définissent chacun une direction correspondant à la direction de la force appliquée par le câble à la plate-forme. Selon cet exemple de réalisation, chaque câble (130) est dit moteur et est connecté à son extrémité opposée à l'extrémité fixée à l'accroche, à un treuil (111), pourvu de moyens de motorisation. Selon cet exemple de réalisation un ancrage est constitué par ledit treuil (111) ou par une poulie (112), apte à effectuer un renvoi selon une autre direction dudit câble. La longueur des câbles agissant sur la plate-forme est pilotée par un directeur (150) de commande numérique et des moyens (160) de programmation de ce directeur de commande. Cette variation de longueur est obtenue, selon un exemple de réalisation, par l'enroulement et le déroulement des câbles sur les treuils (111), de sorte à déplacer la plate-forme et assurer en permanence l'équilibre statique de celle-ci sous l'action des forces de tension des câbles (130). Les points d'ancrage sont répartis dans l'espace et ne peuvent pas être regroupés en moins de deux plans, quelque soit la configuration. Selon cet exemple de réalisation, les ancrages (112) constitués par des poulies définissent un ensemble reconfigurable car lesdites poulies (112) sont aptes à être déplacées dans la structure. Selon cet exemple de réalisation non limitatif, lesdites poulies (112) sont aptes être déplacées verticalement le long des piliers du portique (110). Selon des variantes de réalisation, le déplacement desdites poulies est réalisé manuellement entre des points de fixation pré-définis ou est motorisé et commandé par le directeur (150) de commande numérique. Selon une autre variante, les deux variantes précédentes sont combinées à savoir, que le robot est reconfigurable manuellement, selon une ou plusieurs configurations génériques, au sein desquelles configurations génériques les ancrages sont déplaçables selon des courses réduites. Toujours selon des variantes de réalisation, les poulies sont liées à la structure par une liaison pivot d'axe parallèle au pilier qui les supportent, et sont par suite librement orientables selon cet axe. Si nécessaire certaines poulies sont liés à la structure fixe selon une double liaison pivot ou selon une liaison rotule. Selon un exemple de réalisation, l'orientation des ancrages est motorisée et pilotée par le directeur de commande numérique. Finalement selon une autre variante de réalisation, les treuils (111) motorisés sont également déplaçables et orientables dans la structure (110), par des moyens motorisés pilotés par le directeur (150) de commande numérique. Ces divers mouvements permettent d'ajouter des degrés de liberté et d'accroître le volume de travail atteignable sans collision. En contrepartie, la combinatoire relative à la détermination du placement optimal des points d'ancrage croît en conséquence et les méthodes de l'art antérieur ne permettent pas de calculer les configurations assurant l'équilibre statique de la plate-forme tout le long de la trajectoire visée.

Figure 2, selon une première configuration géométrique, les ancrages (211) du dispositif, représentés symboliquement, sont placés aux sommets d'un parallélépipède rectangle, dont les côtés selon les axes $x$ (201), $y$ (202) et $z$ (203) du repère machine du dispositif objet de l'invention ont respectivement pour longueur $2u_4$, $2u_5$ et $2u_3$, la plate-forme étant au centre du parallélépipède de coordonnées respectives, $u_1$, $u_2$ et $u_3$. La position de chaque ancrage $A_{i,1}$ qui représente l'ancrage n°$i$ dans la configuration n°1, est déterminée par un vecteur (213) associé, $a_{i,1}$ s'étendant entre l'origine machine (200) du dispositif objet de l'invention et le point (211) représentant la position dudit ancrage. Ainsi, cette configuration n°1, notée $C_1$ est définie par les vecteurs $a_{i,1}$ ($i$=1..8), soit :

$$a_{1,1}=[u_1+u_4,u_2+u_5,-u_3]^T \qquad a_{5,1}=[u_1-u_4,\ u_2-u_5,\ -u_3]^T$$

$$a_{2,1}=[u_1+u_4,\ u_2+u_5,\ u_3]^T \qquad a_{6,1}=[u_1-u_4,\ u_2-u_5,\ u_3]^T$$

$$a_{4,1}=[u_1-u_4,\ u_2+u_5,\ u_3]^T \qquad a_{7,1}=[u_1+u_4,\ u_2-u_5,-u_3]^T$$

$$a_{3,1}=[u_1-u_4,\ u_2+u_5,\ -u_3]^T \qquad a_{8,1}=[u_1+u_4,\ u_2-u_5,u_3]^T$$

de sorte que la configuration $C_1$, selon cet exemple de réalisation, est définie par le vecteur $X_1=[u_1,u_2,u_3,u_4,u_5]^T$.

Selon cet exemple de réalisation, la plate-forme est représentée symboliquement par un parallélépipède (220), de section $l_p \times w_p$ dans le plan $x,y$ et de hauteur $h_p$ selon $z$, et dont les accroches (221) sont positionnées aux sommets dudit parallélépipède (220). Ainsi, les coordonnées de chaque point d'accroche $B_{i,1}$ correspondant à la configuration $C_1$ sont données dans un repère lié à la plate-forme du dispositif objet de l'invention par les vecteurs $b_{i,1}$ soit

$$b_{1,1}= \frac{1}{2} [l_p,w_p,h_p]^T \qquad b_{6,1}= \frac{1}{2} [-l_p,-w_p,-h_p]^T$$

$$b_{2,1}= \frac{1}{2} [l_p,w_p,-h_p]^T \qquad b_{7,1}= \frac{1}{2} [l_p,-w_p,h_p]^T$$

$$b_{3,1}= \frac{1}{2} [-l_p,w_p,h_p]^T \qquad b_{8,1}= \frac{1}{2} [l_p,-w_p,-h_p]^T$$

$$b_{4,1}= \frac{1}{2} [-l_p,w_p,-h_p]^T$$

$$b_{5,1}= \frac{1}{2} [-l_p,-w_p,h_p]^T$$

Ainsi, à partir des vecteurs $b_{i,1}$, de la position de la plate-forme dans le repère machine et des vecteurs $a_{i,1}$, il est possible de déterminer la position et l'orientation des câbles pour tous les points d'une trajectoire réalisée dans cette configuration $C_1$.

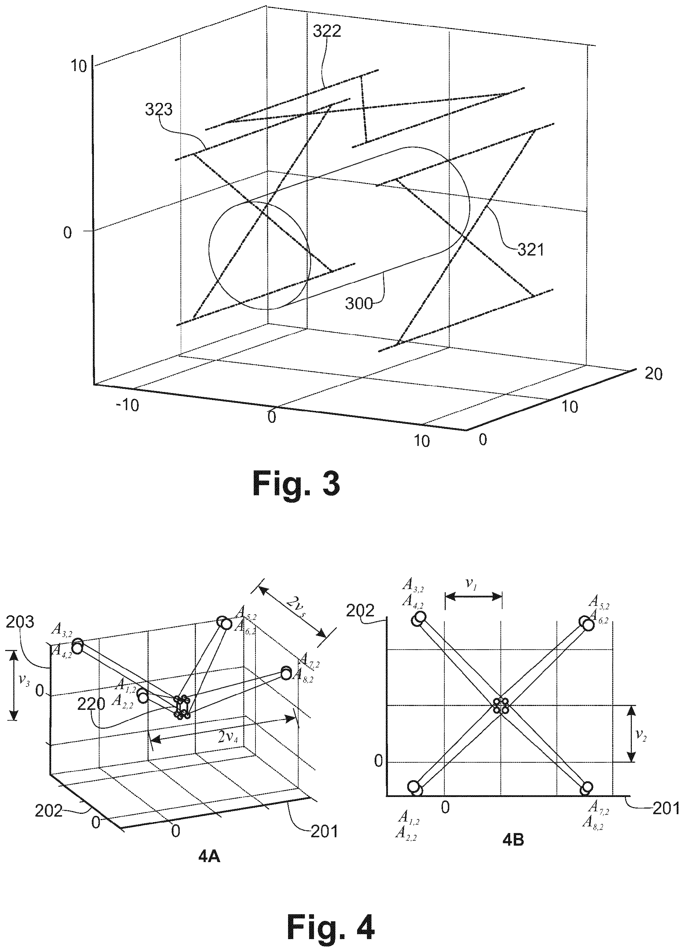

Figure 3, selon un exemple d'utilisation du dispositif, celui-ci est utilisé pour réaliser une opération de décapage/peinture d'une structure (300) de grande dimension telle qu'un tronçon de fuselage d'un aéronef ou la coque d'un navire.

Pour réaliser cette opération, sans collision des câbles avec ladite structure (300), au moins 3 configurations correspondant à 3 trajectoires (321, 322, 323) de la plate-forme du dispositif objet de l'invention sont nécessaires. Ainsi, selon cet exemple de mise en oeuvre, la configuration $C_1$ (Figure 2) est adaptée pour la réalisation de la trajectoire $P_1$ (321). À titre d'exemple non limitatif, pour cette application, les ancrages supérieurs ($A_{1,1}$, $A_{3,j}$, $A_{5,j}$, $A_{7,1}$) sont fixés à une structure au plafond de l'atelier, par exemple à un pont roulant, et les ancrages inférieurs ($A_{2,j}$, $A_{4,1}$, $A_{6,1}$, $A_{8,1}$) sont fixés à des poteaux ou à des chariots mobiles dans l'atelier.

La réalisation de la trajectoire $P_2$ (322) nécessite un changement de configuration.

Figure 4, la configuration $C_2$, adaptée à la réalisation de la trajectoire $P_2$ est définie par le vecteur $X_2=[v_1,v_2,v_3,v_4,v_5]^T$ tel que :

$$a_{1,2}=a_{2,2}=[v_1-v_4,v_2-v_5,v_3]^T$$

$$a_{3,2}=a_{4,2}=[v_1-v_4,v_2+v_5,v_3]^T$$

$$a_{5,2}=a_{6,2}=[v_1+v_4,v_2+v_5,v_3]^T$$

$$a_{7,2}=a_{8,2}=[v_1+v_4,v_2-v_5,v_3]^T$$

Les ancrages sont ainsi tous placés sur la structure au plafond de l'atelier.

Dans cette configuration $C_2$ les points d'accroche des câbles sont également modifiés de sorte que :

$$b_{1,2}= \frac{1}{2} [l_p,-w_p,h_p]^T \qquad b_{5,2}= \frac{1}{2} [-l_p,w_p,h_p]^T$$

$$b_{2,2}= \frac{1}{2} [-l_p,w_p,-h_p]^T \qquad b_{6,2}= \frac{1}{2} [l_p,-w_p,-h_p]^T$$

$$b_{3,2}= \frac{1}{2} [-l_p,-w_p,h_p]^T \qquad b_{7,2}= \frac{1}{2} [l_p,w_p,h_p]^T$$

$$b_{4,2}= \frac{1}{2} [l_p,w_p,-h_p]^T \qquad b_{8,2}= \frac{1}{2} [-l_p,-w_p,-h_p]^T$$

En revenant à la figure 3, la configuration (non représentée) permettant de réaliser la trajectoire $P_3$ (323) est, selon cet exemple de mise en oeuvre, une configuration similaire à la configuration $C_1$ l'ensemble des ancrages étant simplement déplacés de l'autre côté de la structure (300).

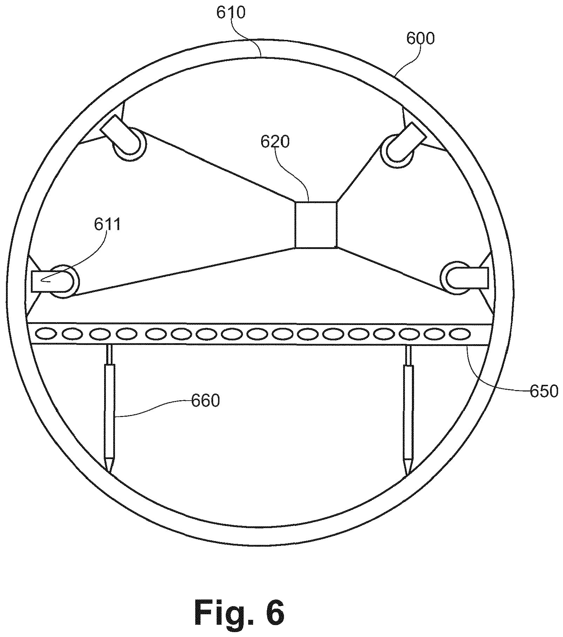

Figure 6, selon un exemple de robot à câbles non conforme à l'invention, plus particulièrement adapté au cas où des opérations sont à réaliser à l'intérieur de la structure (600) de grandes dimensions, le robot est installé à l'intérieur de ladite structure. À titre d'exemple non limitatif, la structure (600) est un tronçon d'aéronef, comprenant un peau extérieure raidie par des cadres (610). Des traverses (650) de plancher sont fixées aux cadres (610) à leurs extrémités et par des bielles (660). Alternativement, ladite structure est une coque de navire ou tout autre structure de grande dimension. L'intérieur d'une telle structure en cours d'assemblage est très encombré et le plus souvent ne comporte pas de sol sur lequel un robot conventionnel est apte à se déplacer. L'utilisation d'un robot à câbles permet de placer un robot apte à couvrir un large volume de travail à l'intérieur de ladite structure (600), les ancrages (611) étant fixés à des éléments structuraux de ladite structure, par exemple aux cadres (610) selon cet exemple de réalisation. Ainsi, la plate-forme (620) supportant tout type d'effecteur est suspendue à l'intérieur de la structure (600).

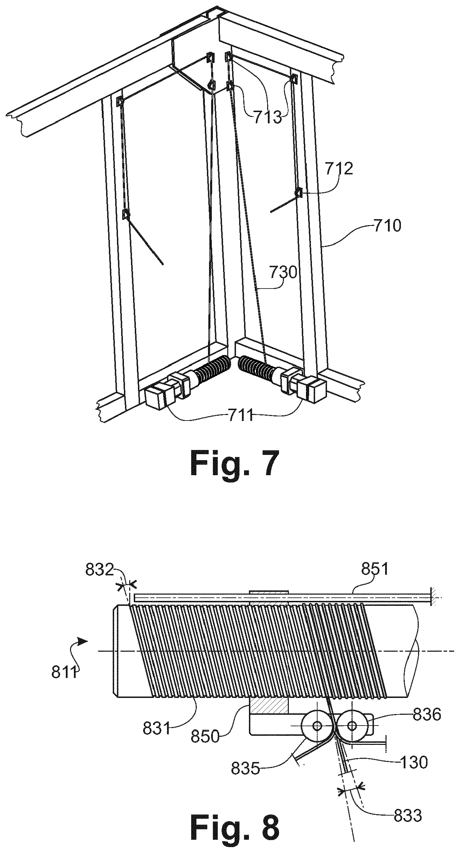

Figure 7, selon un exemple de mise en oeuvre d'un robot à câbles selon l'invention, les moyens de motorisation comprenant les treuils (711) sont préférentiellement placés en partie inférieure de la structure fixe du robot. Chaque câble (730) est renvoyé par un ensemble de poulies (713) dont l'une constitue un ancrage (712) vers la plate-forme (non représentée). Ledit ancrage (712) est porté par un poteau (710) déplaçable dans la structure fixe et fixé à celle-ci, par exemple par boulonnage. Ainsi quelle que soit la position de l'ancrage (712) celui-ci est porté par une structure (710) rigide. Selon cet exemple de réalisation la structure support (710) de l'ancrage est constituée par un poteau vertical, alternativement, cette structure est constituée par une traverse horizontale ou oblique fixée dans la structure fixe. La poulie (712) réalisant l'ancrage est fixée en quelque position longitudinale sur ladite traverse ou ledit poteau (710). L'ensemble de poulies (713) permettant de convoyer le câble (730) vers l'ancrage (712) est par exemple positionné dans la structure fixe dans des emplacements prédéterminés comportant des moyens d'assemblage (non représentés) desdites poulies avec ladite structure. Cette mise en oeuvre permet d'optimiser le cheminement des câbles en dehors de la zone de travail de la plate-forme pour obtenir une transmission optimale des efforts sans torsion parasite tout en facilitant la reconfiguration des ancrages.

Figure 8, le treuil permettant de manoeuvrer un câble (130) du dispositif objet de l'invention comporte un tambour (811), entraîné en rotation par le moteur dudit treuil et qui comporte une gorge (831) hélicoïdale assurant le guidage du câble sur ledit tambour au cours de son enroulement et de son déroulement. Ledit filet hélicoïdal est incliné selon un angle d'hélice (832) par rapport à une section droite du tambour. Pour être maintenu dans la gorge de guidage (831) le câble (130) doit entrer et sortir de la gorge (831) constituant le filet de guidage, selon un angle proche de l'angle hélice (832). En pratique, l'angle de tolérance (833) est inférieur à +/- 3 ° par rapport à cet angle d'hélice. Selon cet exemple de réalisation, deux poulies (835, 836) permettent d'orienter le câble (130) à la sortie, ou à l'entrée en cas d'enroulement, du tambour du treuil selon une orientation angulaire de 180 °, voire plus, tout en conservant un échappement ou une entrée du câble sur le tambour (811) selon un angle égal à l'angle d'hélice (832). Le câble (130) est ici représenté selon différents angles d'échappement au passage des poulies d'orientation. L'axe de rotation desdites poulies est perpendiculaire à l'axe de rotation du tambour (811). Selon cet exemple de réalisation, lesdites poulies (835, 836) sont portées par un écrou (850) en prise avec le filet (831) formé par la gorge hélicoïdale du tambour. Ledit écrou (850) est arrêté en rotation par des moyens (851) appropriés, de sorte que lorsque le tambour (811) est entraîné en rotation, ledit écrou (850) se déplace en translation parallèlement à l'axe du tambour, et que les poulies (835, 836) d'orientation suivent rigoureusement le point de sortie ou d'entrée du câble (130) sur le tambour (811).

Ainsi lesdits treuils offrent une grande souplesse de placement dans la structure fixe. Cette souplesse de placement est notamment particulièrement avantageuse dans le cas où les ancrages du robot à câbles sont fixés directement à la structure faisant l'objet d'opérations réalisé par ledit dispositif, comme le représente la figure 6.

Ces caractéristiques des treuils du robot à câbles, combinées aux caractéristiques de cheminement des câbles, comme décrit en regard de la figure 7, permettent une grande souplesse dans la configuration des ancrages dans la structure fixe, de sorte à adapter la configuration du robot en fonction de la tâche à réaliser et des obstacles présents dans son espace de travail. Les câbles cheminant sur des poulies ne subissent pas de phénomène de torsion parasite. Ainsi lesdits câbles sont avantageusement utilisés pour convoyer de l'énergie à la plate-forme ou pour convoyer vers la dite plate-forme des informations.

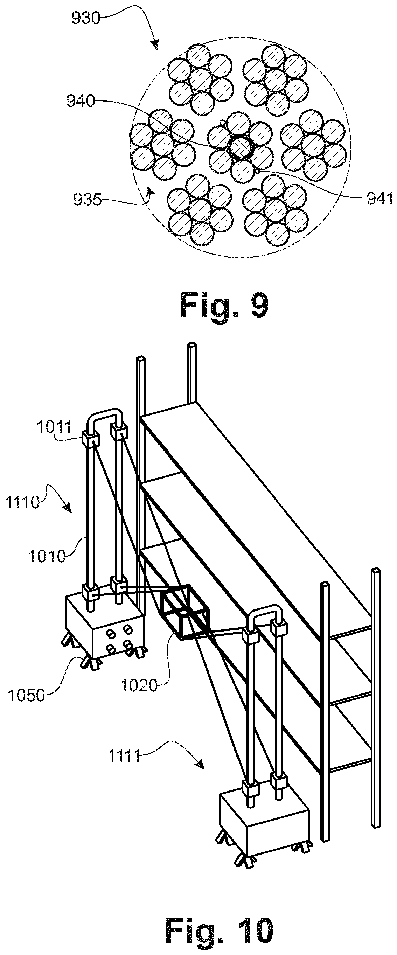

Figure 9, selon un exemple de réalisation non limitatif, les câbles utilisés pour manoeuvrer la plate-forme sont des câbles torsadés. Selon un exemple de réalisation, l'un des câbles (930) est constitué de plusieurs torons (935), constitués par exemple de fils d'acir, et l'un de ces torons comporte un conducteur (940), ou plusieurs conducteurs, isolés électriquement, permettant de transmettre un courant électrique de puissance ou de commande à la plate-forme. En complément, ou indépendamment, de ce moyen (940) conducteur, ledit câble (930) comprend avantageusement une ou plusieurs fibres (941) optiques pour l'échange d'informations à haut débit avec la plate-forme. Ces moyens de commande ou de puissance, permettent de commander le fonctionnement d'un effecteur ou d'un bras robotisé supporté par la plate-forme

Le procédé objet de l'invention permet, parmi toutes les configurations offertes par le robot à câbles, de définir une configuration optimale ou quasi optimale des ancrages en fonction des trajectoires visées pour la plate-forme.

Ainsi, en revenant à la figure 3, selon un exemple de mise en oeuvre du procédé objet de l'invention, afin d'étudier la position optimale des ancrages pour chacune des configurations, les trajectoires (321, 322, 323) sont discrétisées en un nombre fini de segments, par exemple, selon une interpolation linéaire en G01 de ladite trajectoire selon la norme ISO 6983. À titre d'exemple, la trajectoire $P_1$ est discrétisée en 38 points, soit 37 segments. Chaque couple de paramètres $u_i$, $v_i$ définissant la position d'un ancrage selon une configuration, est modifié selon un pas d'itérations entre deux bornes. À titre d'exemple, chaque couple de paramètres $u_i$, $v_i$ est étudié selon 9 itérations entre des bornes de variation définies. L'analyse de chaque situation, c'est-à-dire de toutes les combinaisons de points de la trajectoire et des positions des ancrages conduit à une explosion combinatoire. Ainsi, selon cet exemple de réalisation 59049 ($9^5$) situations devraient être testées dans le cas de la configuration $C_1$ pour chaque point de la trajectoire $P_1$ soit plus de 2 millions de combinaisons possibles.

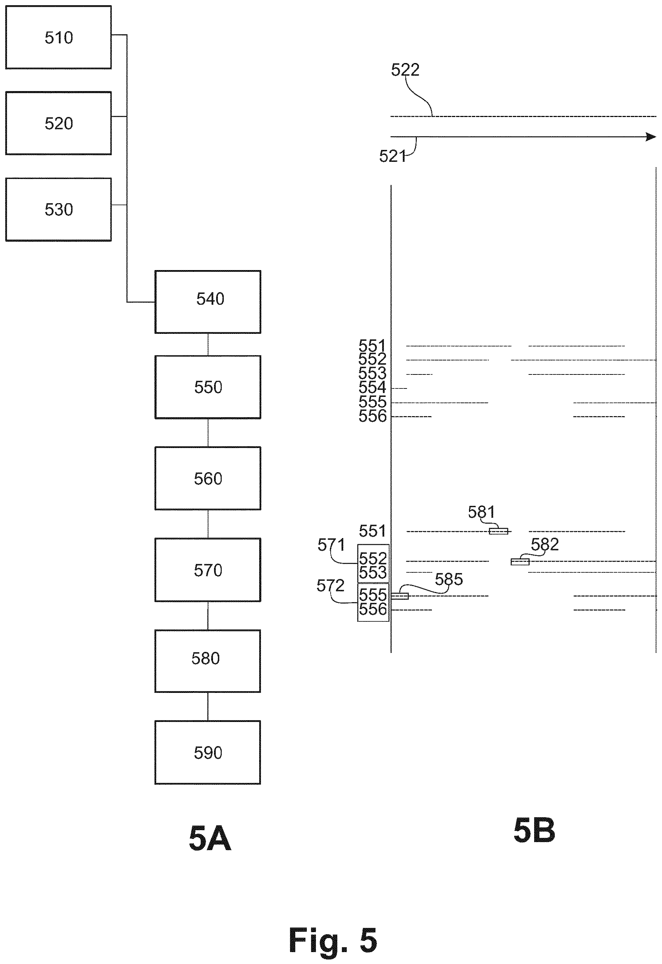

Figure 5A, le procédé objet de l'invention vise à réduire le nombre de combinaisons étudiées pour déterminer la position optimale des ancrages. Une première étape (510) d'initialisation matérielle, du procédé objet de l'invention, consiste à obtenir l'agencement matériel du dispositif étudié. À titre d'exemple non limitatif, cette étape consiste à obtenir :

- le nombre de câbles : $m$ ;
- l'élasticité des câbles, par exemple au moyen de leur module d'Young $E$ ;
- le diamètre des câbles $\Phi_c$ ;
- le coefficient de raideur $k_i$ de chaque câble $i$ ,
- la tension $\tau_{max}$ admissible dans les câbles de sorte qu'à tout moment et pour chaque câble $i$ $(i=1,...,m) : 0 < \tau_i < \tau_{max}$ qui traduit, notamment, que chaque câble doit toujours être en tension ;

- la position du point d'accroche $B_i$ du câble dans le repère de la plate-forme représenté pour chaque câble par le vecteur $b_i$ ;

Ces conditions matérielles, constantes, sont regroupées dans un vecteur :

$$q = [m, E, \Phi c, k_i, \tau_{max}, b_i]^T$$

Une étape (520) de définition du parcours, du procédé objet de l'invention, consiste à obtenir la trajectoire pour laquelle l'optimisation du placement des points d'ancrage ou des points d'accroche est visée. À titre d'exemple non limitatif, cette étape (520) consiste à obtenir :

- les $n$ points définissant la position de la plate-forme dans le repère machine du robot à câbles lors de la réalisation de la trajectoire $P$ visée ;
- l'orientation de la plate-forme en chacun des points de la trajectoire, représentée par exemple au moyen d'une matrice de rotation $R$ ;

Ainsi, selon un exemple de réalisation, chaque pose, ou posture, de la plate-forme en chaque point de la trajectoire $P$ est déterminé par un vecteur $\mathbf{p} = [\mathbf{t}, \Phi]^T$ où le vecteur $\mathbf{t}$ défini les coordonnées cartésiennes de la plate-forme dans le repère machine du dispositif, et le vecteur $\Phi$ l'orientation de la plate-forme, déterminée, par exemple par les angles d'Euler vis-à-vis des axes $x, y$ et $z$ du repère machine du dispositif.

Selon un mode de réalisation particulier du procédé objet de l'invention, l'étape (520) de définition du parcours comprend également la définition du torseur, $w_e$, des forces extérieures appliquées à la plate-forme en chaque point de la trajectoire. Ce torseur est constitué de la sollicitation liée au poids de la plate-forme et de l'effecteur, et des efforts engendrés par ledit effecteur au cours de la tâche réalisée. À titre d'exemple non limitatif, il s'agit d'efforts d'usinage ou de la force impulsionnelle produite par l'éjection d'un produit comme de la peinture ou un mélange de décapage par la buse de l'effecteur. Ainsi, en chaque point de la trajectoire $P$, est défini un vecteur $w_e = [\mathbf{f}, \mathbf{m}]^T$ où le vecteur $\mathbf{f}$ représente les composantes des actions extérieures sur le axes $x, y$ et $z$, et le vecteur $\mathbf{m}$ les composantes des moments des actions extérieures sur lesdits axes. Selon une variante avantageuse ces actions extérieures sont définies par des bornes de variation extrêmes sur les différentes composantes. Cette méthode permet d'éviter un calcul exact des actions extérieures, notamment en ce qui concerne les actions engendrées par le procédé mis en oeuvre, lesquelles ne sont pas toujours aisées à connaître avec précision et fiabilité le long de la trajectoire.

Selon une autre variante avantageuse, cette étape (520) de définition du parcours, comprend la définition de la forme, de la position et de l'orientation d'un obstacle dans le volume de travail du dispositif.

Figure 5B, selon une illustration schématique, la trajectoire (521) visée est discrétisée en une pluralité de segments (522) lors de l'étape (520) de définition du parcours.

En revenant à la figure 5A, le procédé objet de l'invention comprend une étape (530) d'acquisition des configurations de départ des ancrages et des accroches. La définition de ces configurations de départ est nécessaire à la mise en oeuvre du procédé, qui procède par optimisation, et doit donc partir d'une configuration initiale. Selon des variantes de réalisation, l'ensemble des configurations de départ correspond à des configurations fixes et matériellement définies des ancrages ou des accroches, par exemple, lorsque le robot considéré n'autorise que des positions discrètes des ancrages ou des accroches. Alternativement, lorsque, par exemple, la position des ancrages est modifiables continûment, le jeu de configurations de départ est généré automatiquement de sorte à explorer le domaine de travail. À titre d'exemple, l'étape (530) d'acquisition des configurations de départ consiste à définir pour chaque point d'ancrage $A_i, i=1,...,m$ dont la position dans le repère machine est définie par le vecteur $a_i, i=1,...,m$ un ensemble de $n_v$ paramètres $u_k, k=1,...,n_v$ applicables aux coordonnées de chaque vecteur $a_i$ et un ensemble de valeurs discrètes correspondant à une combinaison de ces paramètres. Ces combinaisons de valeurs sont contenues dans un set $[u_k]$ de sorte que le $k$-ième set contient $v_k$ valeurs.

Ces trois étapes (510, 520, 530) d'acquisition des conditions initiales du problème s'écrivent d'un point de vue algorithmique :

Require : $q = [m, E, \Phi c, k_i, \tau_{max}, b_i]^T$
Require : $P$
Require : $R$
Require : $w_e$
Require : $[u_k]$ $k=1,...,n_v$

Selon un exemple de réalisation le procédé objet de l'invention comporte une étape (540) de modélisation du problème consistant à déterminer les $n_c$ configurations possibles du robot en combinant les variables contenues dans chaque set $[u_k]$ sous la forme de vecteurs $\boldsymbol{x}_{l,}$ $l=1,...,n_c$ chaque vecteur $\boldsymbol{x}_l$ définissant une configuration $\mathscr{E}_l$.

D'un point de vue algorithmique cette étape de modélisation s'écrit :
Generate

$$n_c = \prod\nolimits_{k=1}^{n_v} v_k \quad , \boldsymbol{x}_l$$

Selon une étape de calcul (550) des points atteignables de la trajectoire du procédé objet de l'invention, celui-ci calcule, pour chaque configuration, quels sont les points atteignables de la trajectoire $P$. Un point de la trajectoire est atteignable pour une confguration $\mathscr{E}_{l}$ donnée si en ce point les contraintes sont vérifiées, par exemple :

- l'équilibre statique de la plate-forme est assuré ;
- la précision de positionnement visée est vérifiées ;
- il n'y a pas de collision avec les obstacles éventuels dans l'environnement ;
- il n'y a pas de collision ou d'interférence.

À l'issue de cette étape (550), pour chaque configurations $\mathscr{E}_{l}$ et chaque trajectoire il est défini un ensemble de points $\overline{P}_{p,l}$ = 1 répondant aux contraintes est qui sont par conséquent atteignables et un ensemble de points $\overline{P}_{p,l}$ = 0 pour lesquels les conditions ne sont pas vérifiées et qui, par conséquent ne sont pas atteignables dans la configuration considérées. D'un point de vue algorithmique cette étape (550) s'écrit :

**for** $l=1,...,n_c$ **do**

    Compute $a_{i,l}$, $i=1,...,m$

    **for** $p=1,....,n_p$ **do**

        **function** CONSTRAINT($a_{i,l}$)

           Return $c_{l,p}$

    **end function**

    **If** $c_{l,p} = 1$ **then**

$$\overline{P}_{p,l} = 1$$

    **else**

$$\overline{P}_{p,l} = 0$$

    **end if**

  **end for**

Compute : $\left[\overline{P}_{p,l}\right]$

Compute : $h_l = \dfrac{\sum_{p=1}^{n_p}\overline{P}_{p,l}}{n_p}$

**end for**

Pour une configuration $\mathscr{C}_l$ donnée les points atteignables d'une trajectoire donnée sont donnés par un ensemble :

$$\left[\overline{P}_{p,l}\right] = \left\{\overline{P}_{p,l} = 1, p = 1,...,n_p\right\}$$

Certains points atteignables de la trajectoire sont susceptibles de former des groupement disjoints. Ainsi selon un exemple de réalisation, le procédé comporte une étape consistant à éliminer les groupements de points atteignables ne couvrant pas plus d'une proportion définie de la trajectoire. À l'issue de ce calcul, les configurations qui ne couvrent pas la trajectoire c'est-à-dire qui n'ont aucun point atteignable, ou, selon une variante, dont la proportion de points atteignables est inférieure à une proportion définie sont éliminées de la solution.

La proportion de points atteignables de la trajectoire est donnée par :

$$h_l = \frac{\sum_{p=1}^{n_p} \overline{P}_{p,l}}{n_p}$$

Figure 5B, de manière illustrative, les points atteignables de la trajectoire (522) discrétisée sont calculés pour 6 configurations (551, 552, 553, 554, 555, 556). Parmi ces configurations, l'une d'elles (554) ne comprend qu'un faible nombre de points atteignables, cette configuration (554) est éliminée de la solution de même que toutes les configurations ne faisant apparaître aucun point atteignable.

En revenant à la figure 5A, une étape (560) du procédé objet de l'invention, consiste à identifier les configurations dominantes parmi les configurations retenues à l'issue de l'étape (550) précédente.

Une configuration dominante est définie comme une configuration qui est la seule à couvrir un ou plusieurs points de la trajectoire, c'est-à-dire qui est la seule configuration à pouvoir atteindre lesdits points. Ainsi, l'ensemble de points $[\underline{P}_d]$ appartenant à une configuration dominante $d$ est défini, pour une trajectoire par :

$$[\underline{P}_d] = \left\{ \overline{P}_{p,d}, p = 1,...,n_p \text{ où } \overline{P}_{p,j} \equiv 0, \forall\, j = 1,...,n_d \text{ avec } j \neq d \right\}$$

Ainsi les $n_d$ configurations dominantes identifiées correspondent au nombre minimal de configurations nécessaires pour couvrir la trajectoire $P$.

D'un point de vue algorithmique cette étape (560) s'écrit :

```
function DOMINANT([Pl])
      - indentifier nd configurations dominantes et les ensembles
          [Pd] correspondant
      - identifier les nd ensembles [Pd]
      return nd, [Pd],[Pd]
   end function
```

Figure 5B, selon cet exemple illustratif, les configurations restantes (551, 552, 553, 555, 556) comprennent 3 configurations dominantes (551, 552, 555).

Figure 5A, l'étape (560) de détermination des configurations dominantes est suivie d'une étape (570) de regroupement, consistant à regrouper sous une même configuration dominante les configurations couvertes par ladite configuration dominante. Cette condition de regroupement permet d'identifier pour chacune des $n_d$ configurations dominantes un ensemble $\mathcal{G}_d$ tel que :

$$\mathcal{E}_l \in \mathcal{G}_d \text{ si pour } l=1,...,n_c \quad \begin{cases} [\overline{P}_l] \in [\overline{P}_d] \\ [\underline{P}_d] \in [\overline{P}_l] \end{cases}$$

Ce qui d'un point de vue algorithmique se traduit par :

$$\textbf{for } l=1,...,n_c \textbf{ do}$$

$$\textbf{for } d=1,..,n_d \textbf{ do}$$

$$\textbf{if} [\,\overline{P}_l\,] \in [\,\overline{P}_d\,] \textbf{ then}$$

$$\textbf{if } [\,\underline{P}_d\,] \in [\,\overline{P}_l\,] \textbf{ then}$$

$$l \longleftarrow l+1$$

$$\mathscr{E}_l \in \mathscr{G}_d$$

$$\textbf{end if}$$

$$\textbf{end if}$$

$$\textbf{end for}$$

$$\textbf{end for}$$

Figure 5B, selon un exemple illustratif, les configurations sont regroupées selon deux groupements (571, 572) comprenant chacun deux configurations dont une dominante, et une configuration dominante (551) unique.

Figure 5A, selon une étape (580) de criblage, visant à éliminer les configurations redondantes, ladite étape (580) consiste à rechercher les segments singuliers de chaque configuration dominante. Un segment singulier est un ensemble de points de la trajectoire qui ne sont couverts que par une seule configuration dominante.

Figure 5B, à titre d'exemple illustratif, chaque configuration dominante (551, 552, 555) comprend un segment singulier (581, 582, 585). L'une des configurations (553) regroupée avec l'une des configurations dominante (552) ne couvre pas le segment singulier (582) de cette configuration dominante. Aussi, cette configuration (553) est éliminée de la solution.

Cette démarche itérative permet limiter l'optimisation à l'étude des configurations pertinentes.

Figure 5A, au cours d'une étape (590) d'optimisation, cette optimisation est conduite sur toutes les combinaisons possibles des configurations retenues dans chaque groupement de configuration $\mathscr{G}_{d'}$. Avantageusement, les combinaisons de configurations qui ne permettent pas d'atteindre tous les points de la trajectoire ne sont pas considérées dans cette analyse.

Figure 5B, à titre d'exemple illustratif, aucune combinaison mettant en oeuvre une ou plusieurs configurations dominantes (551, 552) des premiers groupes (551, 571) avec la configuration (556) non dominante du troisième groupe (572) ne permet d'atteindre tous les points de la trajectoire, de sorte que cette configuration (556) et ses combinaisons avec d'autres configurations sont ignorées. En pratique, selon cet exemple illustratif, seule la combinaison des 3 configurations dominantes permet de couvrir toute la trajectoire. L'optimisation est réalisée selon des critères d'optimisation définis, au moyen de techniques d'optimisation connues de l'art antérieur, les critères d'optimisation étant définis en fonction de l'application et permettent de définir l'enchaînement optimal des configurations en dehors des segments singuliers.

Dans le cas où aucune solution optimale complète n'est obtenue, plusieurs actions sont possibles en fonction de l'application visée comme :

- définir un nouveau jeu de configurations de départ, vis-à-vis des ancrages ou des accroches ;
- relâcher les contraintes d'optimisation, par exemple en acceptant une précision inférieure et des déformations plus importantes des câbles ;
- modifier la position de la pièce ou des obstacles dans le volume de travail du robot.

Figure 10, selon un exemple de robot à câbles non conforme à l'invention, tout ou partie des poteaux de le structure fixe est supportée par des moyens mobiles robotisés de sorte à adapter la configuration de ladite structure fixe à l'espace disponible. Selon un exemple, la plate-forme (1020) du dispositif objet de l'invention est suspendue par des câbles dont les ancrages (1011) sont supportés par des piliers (1010) portés par des robots (1110, 1111) mobiles. Ainsi, lesdits robots sont aptes à se déplacer dans l'espace de manière autonome, jusqu'à un lieu où une manutention ou une manipulation d'objet ou de moyens est à réaliser, puis, de déployer la structure du robot à câbles pour réaliser l'opération visée. À cette fin, lesdits robots (1110, 1111) comportent des moyens (1050) leur permettant de s'ancrer en position de manière stable et sécurisée. Selon un exemple de réalisation, la logique et les moyens de calcul nécessaires au pilotage de la plate-forme sont compris dans lesdits robots (1110, 1111) et ceux-ci comprennent des moyens de liaison (non représentés), par exemple par radio, avec un centre de supervision, dans lequel un opérateur commande la plate-forme au moyen d'une manette de type « *joystick* ». À cette fin, la plate-forme (1020) comporte avantageusement des moyens vidéo (non représentés) permettant audit opérateur de contrôler visuellement le résultat de ses actions.

La description ci-avant et notamment l'exemple de réalisation de l'invention selon les figures 7 et 8 montrent que l'invention atteint les objectifs visés, en particulier, par la sélection séquentielle des configurations pertinentes elle permet de faire évoluer un robot à câbles dont les ancrages sont organisés selon un schéma tridimensionnel, dans des conditions de reconfiguration optimales permettant de couvrir un large volume de travail et d'évoluer hors collisions dans un environnement encombré. Ainsi, les ancrages sont installés au plafond ou sur les murs délimitant l'environnement. Selon un mode de réalisation particulier, tout ou partie des ancrages sont supportés par des drones ou des grues.

Le dispositif et le procédé objets de l'invention sont particulièrement adaptés à la mise en oeuvre d'applications tels que l'organisation logistique des ateliers aéronautiques, pour le déplacement et l'assemblage de tronçons ou de voilures d'aéronef, pour la réalisation d'opérations de perçage et de rivetage sur ces tronçons, ou encore comme support de moyens de mesure ou de contrôle desdits tronçons tels que des moyens de mesure par photogrammétrie ou de contrôle par ultrasons.

Le procédé et le dispositif objets de l'invention sont également adaptés à des applications mettant en oeuvre des tronçons de navire, notamment pour l'assemblage desdits tronçons ou de sous-ensembles avec ces tronçons, notamment en hauteur ou dans des zones difficiles d'accès, ainsi que la réalisations d'opérations sur ces tronçons de navire, telles que peinture, décapage, grenaillage, soudage.

Finalement, et sans que cette liste ne soit exhaustive, le procédé et le dispositif objets de l'invention, sont adaptés à l'assemblage et à la réalisation d'opérations sur des éléments structuraux dans le secteur de l'énergie, notamment sur des éoliennes, des hydrauliennes ou des turbines, par exemple sur des mâts où les structures de support offshore, dites jackets, ledit robot étant fixé à l'extérieur à la structure ou suspendu à l'intérieur de ladite structure.

**Revendications**

1. Dispositif (100) pour le déplacement et l'orientation dans l'espace d'une plate-forme (120, 220, 620, 1020) portant un effecteur, lequel dispositif comprend :

   i. une pluralité de câbles (130) s'étendant entre un point d'accroche (121) sur la plate-forme et un ancrage (111, 112, 712, 1011) lié à une structure (110) fixe dans l'espace, les positions des ancrages n'étant pas contenues dans le même plan ;
   ii. un ensemble de câbles, dit ensemble moteur, dont une extrémité de chaque câble est fixée à un treuil (111) motorisé pour l'enroulement et le déroulement du câble sur ledit treuil ;
   iii. un ensemble de câbles, dit ensemble reconfigurable, dont les points d'accroche (121) ou les ancrages (111, 112, 712, 1011) sont aptes à être déplacés par rapport à la plate-forme (120, 220, 620, 1020) ou dans la structure (110) fixe ;

   l'ensemble moteur comprenant un treuil comportant :

   - un tambour (811) d'enroulement, entraîné en rotation par le moteur du treuil et comprenant un filet guide (831) hélicoïdal pour l'enroulement du câble (130) ;
   - deux poulies (835, 836) d'orientation dont l'axe de rotation est perpendiculaire à l'axe de rotation du tambour (811) ;
   - des moyens, dits moyens suiveurs (850), pour déplacer en translation la poulie (835, 836) d'orientation de sorte que lors du déroulement ou de l'enroulement du câble (130) sur le tambour (811), ledit câble soit orienté par la poulie d'orientation selon un écart angulaire inférieur à une valeur maximale (833), dite angle de tolérance, par rapport à l'angle d'hélice (832) du filet guide hélicoïdal, l'angle de tolérance étant inférieur à +/- 3° par rapport audit angle d'hélice (832) ;

   les deux poulies (835, 836) étant configurées pour suivre un point de sortie ou d'entrée du câble (130) sur le tambour (811) et permettre d'orienter le câble (130) à la sortie, ou à l'entrée en cas d'enroulement, du tambour (811) du treuil selon une orientation angulaire de 180°, tout en conservant un échappement ou une entrée du câble sur le tambour (811) selon l'écart angulaire inférieur à la valeur maximale (833).

**2.** Dispositif selon la revendication 1, dans lequel les moyens suiveurs comprennent un écrou (850) en prise sur le filet guide (831) du tambour (811) et portant la poulie (835, 836) d'orientation.

**3.** Dispositif selon la revendication 1, dans lequel l'ensemble de câble (930) comprenant un conducteur (940) électrique de puissance ou de commande ou un moyen (941) filaire de transmission d'information vers la plateforme.

**4.** Dispositif selon la revendication 1, dans lequel la structure fixe comprend un robot (1110, 1111) apte à se déplacer.

**5.** Dispositif selon la revendication 1, comprenant :
iv. des ancrages (111, 112) comprenant une capacité de déplacement selon un axe de rotation vis-à-vis de la structure (110) fixe.

**6.** Dispositif selon la revendication 1, comprenant :
v. des moyens de guidage et des moyens de motorisation et de commande pour le déplacement d'un ancrage de l'ensemble reconfigurable.

**7.** Dispositif selon la revendication 5, comprenant :
vi. des moyens de motorisation et de commande pour l'orientation d'un ancrage vis-à-vis de la structure fixe.

**8.** Dispositif selon la revendication 6, comprenant :

vii. un directeur de commande comprenant un calculateur pour le pilotage des moyens de motorisation de l'ensemble de moteur et de l'ensemble reconfigurable ;
viii. un moyen (160) de programmation apte à dialoguer avec le directeur de commande pour programmer des mouvements de la plate-forme.

**9.** Utilisation d'un dispositif selon l'une quelconque des revendications précédentes, pour une opération de décapage/peinture d'une surface courbe d'une structure de grande dimension (300).

**10.** Utilisation d'un dispositif selon l'une quelconque des revendications précédentes, pour la réalisation d'une opération à l'intérieur d'une structure (600) de grande dimension, les ancrages (611) dudit dispositif étant fixés à des éléments (610) structuraux à l'intérieur de ladite structure (600).

**11.** Procédé pour la détermination des configurations minimales de l'ensemble reconfigurable d'un dispositif selon la revendication 1, afin de réaliser une trajectoire (521) définie dans des conditions d'équilibre statique, comprenant les étapes consistant à :

a. obtenir (510) l'agencement matériel du dispositif ;
b. obtenir (520) la trajectoire visée de l'effecteur, discrétisée en segments de longueur appropriée ;
c. obtenir le torseur des forces extérieures appliquées à la plate-forme en chaque point de ladite trajectoire discrétisée ;
d. obtenir (530) un ensemble discret de configurations, dites configurations de départ, de l'ensemble reconfigurable ;
e. analyser (550) pour chaque configuration de départ (551, 552, 553, 554, 555, 556) la capacité d'atteindre tous les segments de la trajectoire définie à l'étape b) dans les conditions d'équilibre statique en fonction des actions extérieures définies à l'étape c) et de l'agencement matériel obtenue à l'étape a), et éliminer les configurations (554) de départ les moins prometteuses ;
f. déterminer (560) parmi les configurations restantes de l'étape e) les configurations dominantes couvrant la trajectoire et incluant d'autres configurations ;
g. regrouper (570) les configurations non dominantes (553, 556) en fonction de leur couverture par des configurations (552, 555) dominantes ;
h. rechercher (580) les segments de trajectoires, dits segments singuliers, couverts par une seule configuration dominante, éliminer les configurations incluses dans lesdites solutions dominantes qui ne couvrent pas les segments singuliers ;
j. déterminer (590) parmi les configurations restantes à l'étape h) une combinaison minimale de configurations couvrant l'ensemble des segments obtenus à l'étape b).

**12.** Procédé selon la revendication 11, comprenant une étape consistant à:

k. générer un programme de réalisation de la trajectoire intégrant les changements de configuration déterminés à l'étape j), transmettre ledit programme au directeur de commande du dispositif et réaliser la trajectoire.

**13.** Procédé selon la revendication 11, dans lequel l'étape a) comporte les étapes consistant à :

ai. obtenir le nombre de câbles du dispositif ;
aii. obtenir le diamètre desdits câbles ;
aiii. obtenir le module d'élasticité desdits câbles ;
aiv. obtenir la tension maximale admissible dans lesdits câbles ;
av. obtenir les coordonnées d'un points d'accroche dans un repère lié à la plate-forme.

**14.** Procédé selon la revendication 11, dans lequel l'étape b) comprend les étapes consistant à :

bi. obtenir une suite de points définissant une suite de segments correspondant à la trajectoire dans un repère de référence ;
bii. obtenir l'orientation de la plate-forme correspondant à chaque point de la trajectoire discrétisée.

**15.** Procédé selon la revendication 11, dans lequel l'étape b) comporte une étape consistant à :
biii. obtenir les limites de variation du torseur des actions extérieures appliquées à la plate-forme du dispositif.

**16.** Procédé selon la revendication 11, comprenant avant l'étape e) une étape consistant à :
l. obtenir la position, la forme et l'orientation d'un obstacle (300) dans le volume de travail du dispositif. l'étape e) comprenant un test de collision avec ledit obstacle.

**17.** Procédé selon la revendication 11, comprenant avant l'étape d) une étape consistant à :
m. générer automatiquement un ensemble de configurations de départ pour l'étape d).

**18.** Procédé selon la revendication 16, comprenant après l'étape e) si aucune solution prometteuse n'est trouvée ou après l'étape j) si aucune combinaison de configurations ne permet de couvrir l'ensemble de la trajectoire définie à l'étape b), les étapes consistant à :

n. modifier la position ou l'orientation de l'obstacle (300) dans le volume de travail ;
o. reprendre à l'étape e) avec les nouvelles coordonnées de l'obstacle.

**Patentansprüche**

**1.** Vorrichtung (100) zum Bewegen und räumlichen Ausrichten einer einen Effektor tragenden Plattform (120, 220, 620, 1020), die Folgendes umfasst:

i. mehrere Kabel (130), die sich zwischen einem Befestigungspunkt (121) an der Plattform und einer Verankerung (111, 112, 712, 1011) erstrecken, der mit einer im Raum festen Struktur (110) verbunden ist, wobei die Verankerungspositionen nicht in derselben Ebene enthalten sind;
ii. einen Satz Kabel, der als Motorsatz bezeichnet wird, bei dem ein Ende jedes Kabels zum Aufwickeln des Kabels auf die und Abwickeln von der Winde an einer Motorwinde (111) fixiert ist;
iii. einen Satz Kabel, der als rekonfigurierbarer Satz bezeichnet wird, bei dem die Befestigungspunkte (121) oder Verankerungen (111, 112, 712, 1011) geeignet sind, sich relativ zu der Plattform (120, 220, 620, 1020) oder in der festen Struktur (110) zu bewegen;

wobei der Motorsatz eine Winde umfasst, die Folgendes aufweist:

- eine Kabeltrommel (811), die durch den Windenmotor in Drehung versetzt wird und ein spiralförmiges Führungsgewinde (831) zum Aufwickeln des Kabels (130) umfasst;
- zwei Ausrichtungsrollen (835, 836), deren Drehachse senkrecht zu der Drehachse der Trommel (811) ist;
- Mittel, die als Nachläufermittel (850) bezeichnet werden, zum translatorischen Bewegen der Ausrichtungsrolle (835, 836), so dass während des Abwickelns des Kabels (130) von der oder des Aufwickelns auf die Trommel (811) das Kabel durch die Ausrichtungsrolle gemäß einem kleineren Winkelabstand als einem Maximalwert (833), der als Toleranzwinkel bezeichnet wird, relativ zu dem Steigungswinkel (832) des spiralförmigen Führungsgewindes ausgerichtet ist, wobei der Toleranzwinkel weniger als +/- 3° relativ zu dem Steigungswinkel (832) beträgt;

wobei die zwei Rollen (835, 836) dazu konfiguriert sind, einem Austritts- oder Eintrittspunkt des Kabels (130) auf der Trommel (811) nachzulaufen und das Ausrichten des Kabels (130) an dem Austritt oder, beim Aufwickeln, an dem Eintritt der Trommel (811) der Winde gemäß einer Winkelausrichtung von 180° zu ermöglichen, während gleichzeitig ein Ablaufen des Kabels von der oder ein Eintreten auf die Trommel (811) gemäß dem Winkelabstand, der kleiner als der Maximalwert (833) ist, beibehalten wird.

2. Vorrichtung nach Anspruch 1, wobei die Nachläufermittel eine Mutter (850) umfassen, die in das Führungsgewinde (831) der Trommel (811) eingreift und die Ausrichtungsrolle (835, 836) trägt.

3. Vorrichtung nach Anspruch 1, wobei der Satz Kabel (930) einen elektrischen Leiter (940) zur Stromversorgung oder Steuerung oder ein kabelgebundenes Mittel (941) zum Übertragen von Informationen an die Plattform umfasst.

4. Vorrichtung nach Anspruch 1, wobei die feste Struktur einen Roboter (1110, 1111) umfasst, der geeignet ist, sich zu bewegen.

5. Vorrichtung nach Anspruch 1, die Folgendes umfasst:
iv. Verankerungen (111, 112), die befähigt sind, sich gegenüber der festen Struktur (110) entlang einer Drehachse zu bewegen.

6. Vorrichtung nach Anspruch 1, die Folgendes umfasst:
v. Führungsmittel und Motorisierungs- und Steuermittel für das Bewegen einer Verankerung des rekonfigurierbaren Satzes.

7. Vorrichtung nach Anspruch 5, die Folgendes umfasst:
vi. Motorisierungs- und Steuermittel für die Ausrichtung einer Verankerung gegenüber der festen Struktur.

8. Vorrichtung nach Anspruch 6, die Folgendes umfasst:

vii. eine Steuereinrichtung, die einen Computer zum Steuern der Motorisierungsmittel des Motorsatzes und des rekonfigurierbaren Satzes umfasst;
viii. ein Programmiermittel (160), das geeignet ist, mit der Steuereinrichtung zu kommunizieren, um Bewegungen der Plattform zu programmieren.

9. Verwendung einer Vorrichtung nach einem der vorhergehenden Ansprüche für einen Abtrags-/Lackiervorgang einer gekrümmten Oberfläche einer Struktur (300) mit großen Abmessungen.

10. Verwendung einer Vorrichtung nach einem der vorhergehenden Ansprüche zum Ausführen eines Vorgangs innerhalb einer Struktur (600) mit großen Abmessungen, wobei die Verankerungen (611) der Vorrichtung an Strukturelementen (610) innerhalb der Struktur (600) fixiert sind.

11. Verfahren zum Bestimmen der minimalen Konfigurationen des rekonfigurierbaren Satzes einer Vorrichtung nach Anspruch 1, um unter Bedingungen des statischen Gleichgewichts eine definierte Bahn (521) zu realisieren, das die folgenden Schritte umfasst:

a. Erhalten (510) der Anordnung der Ausrüstung der Vorrichtung;
b. Erhalten (520) der Zielbahn des Effektors, die in Segmente von geeigneter Länge diskretisiert ist;
c. Erhalten der Dyname der externen Kräfte, die auf die Plattform an jedem Punkt der diskretisierten Bahn ausgeübt werden;
d. Erhalten (530) eines Satzes diskreter Konfigurationen, die als Startkonfigurationen bezeichnet werden, des rekonfigurierbaren Satzes;
e. Analysieren (550) der Fähigkeit jeder Startkonfiguration (551, 552, 553, 554, 555, 556), alle Segmente der in Schritt b) definierten Bahn unter Bedingungen des statischen Gleichgewichts in Abhängigkeit von den in Schritt c) definierten äußeren Einwirkungen und der in Schritt a) erhaltenen Anordnung der Ausrüstung zu erreichen, und Eliminieren der am wenigsten vielversprechenden Startkonfigurationen (554);
f. Bestimmen (560) der dominanten Konfigurationen, die die Bahn abdecken und andere Konfigurationen einschließen, unter den aus Schritt e) verbleibenden Konfigurationen;

g. Gruppieren (570) der nicht-dominanten Konfigurationen (553, 556) in Abhängigkeit von ihrer Abdeckung durch dominante Konfigurationen (552, 555);

h. Suchen (580) nach den Bahnsegmenten, die als singuläre Segmente bezeichnet werden, die von einer einzigen dominanten Konfiguration abgedeckt werden, Eliminieren der Konfigurationen, die in den dominanten Lösungen enthalten sind und die die singulären Segmente nicht abdecken;

j. Bestimmen (590) einer minimalen Kombination von Konfigurationen, die den Satz der in Schritt b) erhaltenen Segmente abdecken, unter den aus Schritt h) verbleibenden Konfigurationen.

**12.** Verfahren nach Anspruch 11, das einen Schritt umfasst, der aus Folgendem besteht:

k. Erzeugen eines Programms zum Realisieren der Bahn, das die in Schritt j) bestimmten Konfigurationsänderungen integriert, Übertragen des Programms an die Steuereinrichtung der Vorrichtung und Realisieren der Bahn.

**13.** Verfahren nach Anspruch 11, wobei Schritt a) die Schritte umfasst, die aus Folgenden bestehen:

ai Erhalten der Anzahl der Kabel der Vorrichtung;

aii. Erhalten des Durchmessers der Kabel;

aiii. Erhalten des Elastizitätsmoduls der Kabel;

aiv. Erhalten der maximal zulässigen Spannung in den Kabeln;

av. Erhalten der Koordinaten eines Befestigungspunkts in einem mit der Plattform verbundenen Koordinatensystem.

**14.** Verfahren nach Anspruch 11, wobei Schritt b) die Schritte umfasst, die aus Folgenden bestehen:

bi. Erhalten einer Reihenfolge von Punkten, die eine Reihenfolge von Segmenten definieren, die der Bahn in einem Referenzkoordinatensystem entsprechen;

bii. Erhalten der entsprechenden Ausrichtung der Plattform für jeden Punkt der diskretisierten Bahn.

**15.** Verfahren nach Anspruch 11, wobei Schritt b) einen Schritt aufweist, der aus Folgendem besteht:

biii. Erhalten der Variationsgrenzen der Dyname der auf die Plattform der Vorrichtung ausgeübten äußeren Einwirkungen.

**16.** Verfahren nach Anspruch 11, das vor Schritt e) einen Schritt umfasst, der aus Folgendem besteht:

l. Erhalten der Position, der Form und der Ausrichtung eines Hindernisses (300) in dem Arbeitsvolumen der Vorrichtung, wobei Schritt e) einen Kollisionstest mit dem Hindernis umfasst.

**17.** Verfahren nach Anspruch 11, das vor Schritt d) einen Schritt umfasst, der aus Folgendem besteht:

m. automatisches Erzeugen eines Satzes Startkonfigurationen für Schritt d).

**18.** Verfahren nach Anspruch 16, das nach Schritt e), falls keine vielversprechende Lösung gefunden wird, oder nach Schritt j), falls keine Kombination von Konfigurationen es ermöglicht, den Satz der in Schritt b) definierten Bahn abzudecken, die Schritte umfasst, die aus Folgendem bestehen:

n. Modifizieren der Position oder der Ausrichtung des Hindernisses (300) in dem Arbeitsvolumen;

o. Wiederaufnehmen von Schritt e) mit den neuen Koordinaten des Hindernisses.

## Claims

**1.** Device (100) for moving and orientating in space a platform (120, 220, 620, 1020) supporting an effector, which device comprises:

i. a plurality of cables (130) extending between a fastening point (121) on the platform and an anchor (111, 112, 712, 1011)which is connected to a structure (110) fixed in space, the anchor positions not being contained in the same plane;

ii. a set of cables, referred to as a motor assembly, of which one end of each cable is attached to a motorized winch (111) for winding and unwinding the cable on said winch;

iii. a set of cables, referred to as a reconfigurable assembly, of which the fastening points (121) or anchors (111, 112, 712, 1011) are capable of being moved with respect to the platform (120, 220, 620, 1020) or in the fixed structure (110);

the motor assembly comprising a winch having:

- a winding drum (811) which is rotated by the winch motor and comprises a helical guide thread (831) for winding the cable (130);
- two orientation pulleys (835, 836) of which the axis of rotation is perpendicular to the axis of rotation of the drum (811);
- means, referred to as follower means (850), for translationally moving the orientation pulley (835, 836) so that, when unwinding or winding the cable (130) on the drum (811), said cable is oriented by the orientation pulley according to an angular deviation which is less than a maximum value (833), referred to as the tolerance angle, with respect to the helix angle (832) of the helical guide thread, the tolerance angle being less than +/- 3° with respect to said helix angle (832);

the two pulleys (835, 836) being configured to follow an exit or entry point of the cable (130) on the drum (811) and to allow the cable (130) to be oriented at the exit, or at the entry in the case of winding, of the winch drum (811) according to an angular orientation of 180°, while maintaining the possibility of the cable leaving or entering the drum (811) according to the angular deviation which is less than the maximum value (833).

2. Device according to claim 1, wherein the follower means comprise a nut (850) which is engaged on the guide thread (831) of the drum (811) and supports the orientation pulley (835, 836).

3. Device according to claim 1, wherein the set of cables (930) comprises an electrical power or control conductor (940) or a wire means (941) for transmitting information to the platform.

4. Device according to claim 1, wherein the fixed structure comprises a robot (1110, 1111) which is capable of moving.

5. Device according to claim 1, comprising:
   iv. anchors (111, 112) which are capable of moving along an axis of rotation with respect to the fixed structure (110).

6. Device according to claim 1, comprising:
   v. guide means and motorization and control means for moving an anchor of the reconfigurable assembly.

7. Device according to claim 5, comprising:
   vi. motorization and control means for orientating an anchor with respect to the fixed structure.

8. Device according to claim 6, comprising:

   vii. a control manager comprising a computer for controlling the motorization means of the motor assembly and of the reconfigurable assembly;
   viii. a programming means (160) which is capable of communicating with the control manager in order to program movements of the platform.

9. Use of a device according to any of the preceding claims for a stripping/painting operation of a curved surface of a large structure (300).

10. Use of a device according to any of the preceding claims for carrying out an operation inside a large structure (600), the anchors (611) of said device being attached to structural elements (610) inside said structure (600).

11. Method for determining the minimum configurations of the reconfigurable assembly of a device according to claim 1 in order to achieve a path (521) defined under static equilibrium conditions, comprising the steps of:

    a. obtaining (510) the physical layout of the device;
    b. obtaining (520) the intended path of the effector, discretized into segments of appropriate length;
    c. obtaining the torsor of the external forces applied to the platform at each point of said discretized path;
    d. obtaining (530) a discrete set of configurations, referred to as starting configurations, of the reconfigurable assembly;

e. analyzing (550), for each starting configuration (551, 552, 553, 554, 555, 556), the ability to reach all the segments of the path defined in step b) under static equilibrium conditions on the basis of external actions defined in step c) and the physical layout obtained in step a), and eliminating the least promising starting configurations (554);

f. determining (560), among the remaining configurations of step e), the dominant configurations covering the path and including other configurations;

g. grouping (570) the non-dominant configurations (553, 556) on the basis of their coverage by dominant configurations (552, 555);

h. searching (580) for the path segments, referred to as singular segments, covered by a single dominant configuration, eliminating the configurations included in said dominant solutions which do not cover the singular segments;

j. determining (590), among the configurations remaining in step h), a minimum combination of configurations covering all of the segments obtained in step b).

12. Method according to claim 11, comprising a step of:
k. generating a program for achieving the path integrating the configuration changes determined in step j), transmitting said program to the control manager of the device and achieving the path.

13. Method according to claim 11, wherein step a) includes the steps of:

ai. obtaining the number of cables of the device;
aii. obtaining the diameter of said cables;
aiii. obtaining the modulus of elasticity of said cables;
aiv. obtaining the maximum admissible tension in said cables;
av. obtaining the coordinates of a fastening point in a frame of reference linked to the platform.

14. Method according to claim 11, wherein step b) comprises the steps of:

bi. obtaining a series of points defining a series of segments corresponding to the path in a frame of reference;
bii. obtaining the orientation of the platform corresponding to each point of the discretized path.

15. Method according to claim 11, wherein step b) comprises a step of:
biii. obtaining the variation limits of the torsor of the external actions applied to the platform of the device.

16. Method according to claim 11, comprising, before step e), a step consisting of:

l. obtaining the position, shape and orientation of an obstacle (300) in the working volume of the device,

step e) comprising a collision test with said obstacle.

17. Method according to claim 11, comprising, before step d), a step consisting of:
m. automatically generating a set of starting configurations for step d).

18. Method according to claim 16, comprising, after step e) if no promising solution is found, or after step j) if no combination of configurations makes it possible to cover the whole of the path defined in step b), the steps consisting of:

n. modifying the position or orientation of the obstacle (300) in the working volume;
o. repeating step e) with the new coordinates of the obstacle.

Fig. 1

Fig. 2

Fig. 3

Fig. 4

**5A**

**5B**

# Fig. 5

**Fig. 6**

EP 2 982 483 B1

Fig. 7

Fig. 8

**Fig. 9**

**Fig. 10**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2495958 A
- US 2009066100 A

- EP 2151411 A1

**Littérature non-brevet citée dans la description**

- **ROSATI et al.** On the Design of Adaptive Cable-Driven Systems. *Journal of Mechanisms and Robotics,* Mai 2011, vol. 3